# EUROPEAN PATENT APPLICATION

(11) **EP 1 865 692 A2**
(43) Date of publication of application: **12.12.2007**
(21) Application number: 06120075.4
(22) Date of filing: 04.09.2006
(51) Int. Cl.: H04M 1/23, H04M 1/247

(54) **Mobile phone keypad**

(30) Priority: 09.06.2006 CN 200610087121
(71) Applicant: ASUSTeK Computer Inc., Peitou, Taipei City (TW)
(72) Inventor: Lee, Shen-Yuan, Taipei (TW); Su, Wen-Huei, Taipei (TW); Chen, Chi-Ho, Taipei (TW); Hung, Chien-Ming, Taipei (TW); Lin, Mei-Jui, Taipei (TW)
(74) Representative: Viering, Jentschura & Partner

(57) **Abstract**

A mobile phone keypad design includes a keypad and a joystick. The keypad includes multiple keys. The joystick is disposed between several neighboring keys in the keypad. When the joystick is tilted, a corresponding signal is output.

## Description

### RELATED APPLICATIONS

The present application is based on, and claims priority from, China Application Serial Number 200610087121.X, filed June 9, 2006, the disclosure of which is hereby incorporated by reference herein in its entirety.

### BACKGROUND

### Field of Invention

The present invention relates to a keypad design. More particularly, the present invention relates to a mobile phone keypad design.

### Description of Related Art

In a conventional mobile phone keypad design, most function keys, i.e. "OK", "menu", are located in a separate area, other than the area where number keys (0-9) are grouped together. One single number key usually occupies smaller area than a function key does. It is inconvenient for users to operate a key of a small area.

Because limited keys can be installed in the mobile phone, a joystick is installed adjacent to function keys to expand functionalities of the mobile phone. However, such design shrinks number keys further. In addition, a bigger size screen preferably used in the mobile phone minimizes the area for input interface.

### SUMMARY

It is therefore an objective of the present invention to provide a mobile phone keypad design, convenient for a user to operate.

In accordance with the foregoing and other objectives of the present invention, a mobile phone keypad design is provided. The mobile phone keypad design includes a keypad and a joystick. The keypad includes multiple keys. The joystick is disposed between any two neighboring keys in the keypad. When the joystick is tilted, a corresponding signal is output.

In a preferred embodiment, each of the keys adjacent to the joystick has an arc-shaped cutout to accommodate the joystick. The keys adjacent to the joystick are positioned in a central section of the keypad. The keypad includes keys entitled from 0 to 9 and 10 function keys, arranged by 4 rows and 5 columns.

When the keypad design of present invention is applied to a compact mobile phone, each individual key still occupies area sufficient enough for users to operate easily.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 illustrates a top view of a mobile phone according to one preferred embodiment of this invention;
Fig. 2 illustrates a top view of a keypad design according to one preferred embodiment of this invention; and
Fig. 3 illustrates an exploded view of a keypad design according to one preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

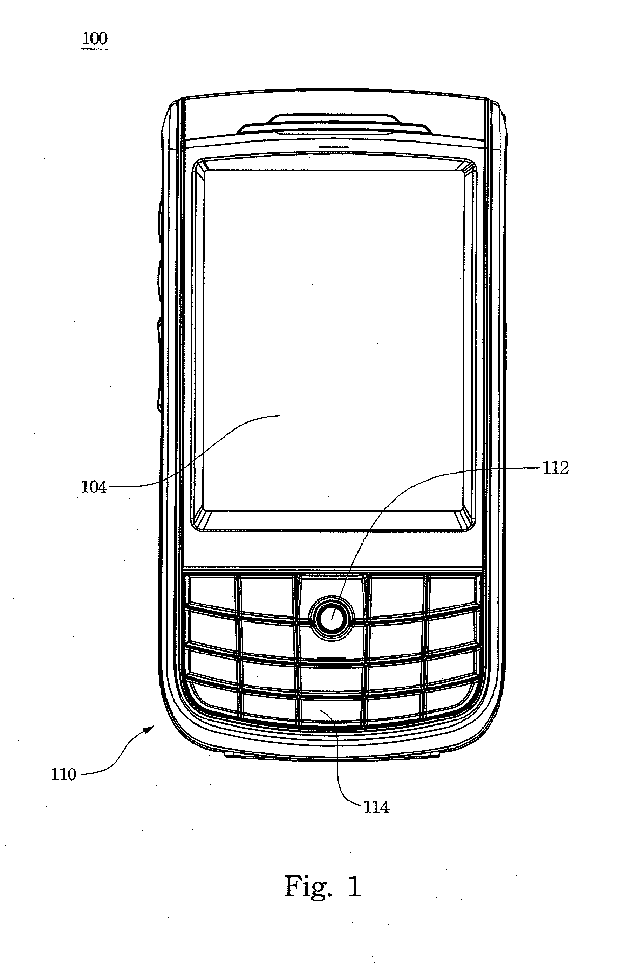

Fig. 1 illustrates a top view of a mobile phone according to one preferred embodiment of this invention. A big size screen 104 on the mobile phone 100 leads to a small keypad 110. To ensure individual key in the keypad 110 to occupy sufficient area for user operation, all number keys (keys entitled 0-9), other function keys (such as "OK" or "menu") and a joystick 112 are grouped together.

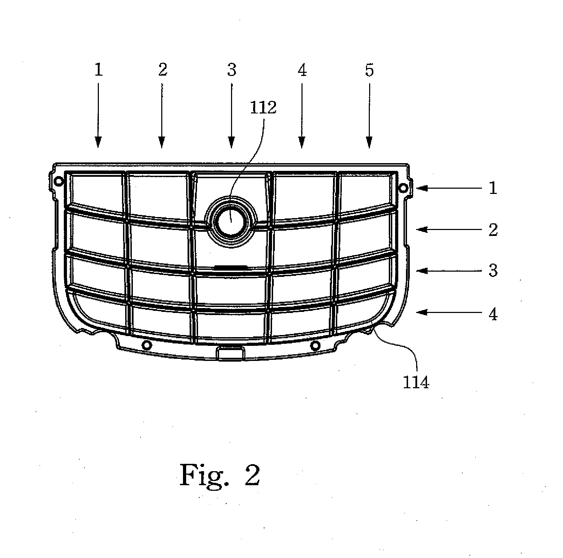

Fig. 2 illustrates a top view of a keypad design according to one preferred embodiment of this invention. This preferred embodiment includes 20 keys 114 and a joystick 112. Keys 114 might include number keys (keys entitled 0-9) and/or other function keys (such as "OK" or "menu"). Although 20 keys of this preferred embodiment are arranged by 4 rows and 5 columns, the number of keys is not limited to 20, arranged by 4 rows and 5 columns. In this preferred embodiment, the joystick 112 is disposed between two neighboring keypads, which are in column 3, row 1 and row 2. In other preferred embodiments, the joystick 112 is disposed between any two neighboring (number) keys, or disposed between keys located in row 1 and row 2, or disposed between any two or multiple neighboring keys in the keypad. Basically, the joystick 112 is preferably disposed in a central section of the keypad for convenient operation. When the joystick is tilted, i.e. pushed by the user, a corresponding signal is output. The row or column sequence (1-4 or 1-5) is for clearly describing the key arrangement, other sequences (i.e., 1-5 is from right to left or 1-4 is from bottom to top) are also suitable, and row or column can be swapped.

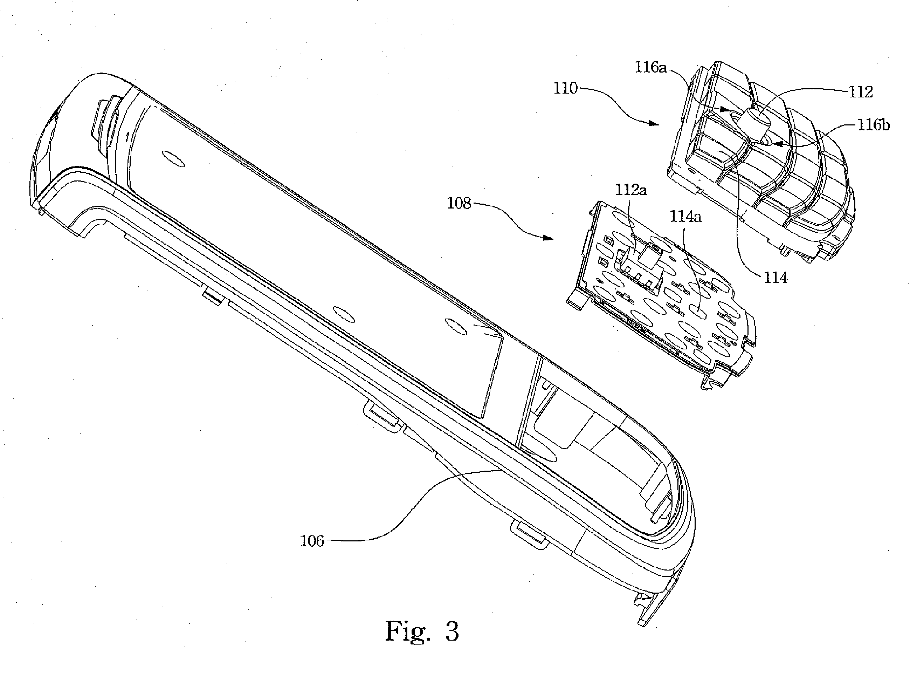

Fig. 3 illustrates an exploded view of a keypad design according to one preferred embodiment of this invention. In this preferred embodiment, a joystick occupying small area is preferably selected so as to fit between two neighboring keys. Each of the keys surrounding the joystick 112 has a semi-circular cutout (or an arc-shaped cutout) 116a/116b to accommodate the joystick 112. Besides, the base 108 under the keypad design may also require some modifications, i.e. assembly holes 114a along the column of the joystick base 112a might require smaller area than other assembly holes. When the keypad design 110a and the base 108 are assembled, a mobile phone as illustrated in Fig. 1 is formed.

According preferred embodiments of the present invention, when the keypad design of present invention is applied to a compact mobile phone, each individual key still occupies area sufficient for users to operate easily.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A mobile phone keypad design, comprising:
a keypad, having a plurality of number keys; and
a joystick, disposed between any two neighboring number keys, when the joystick is tilted, a corresponding signal is output .

2. The keypad design of claim 1, wherein the two neighboring number keys have a semi-circular cutout to accommodate the joystick.

3. The keypad design of claim 2, wherein the two neighboring number keys are positioned in a central section of the keypad.

4. The keypad design of claim 1, wherein the keypad includes keys entitled from 0 to 9.

5. A mobile phone keypad design, comprising:
a keypad, having a plurality of keys; and
a joystick, disposed between several neighboring keys in the keypad, when the joystick is tilted, a corresponding signal is output.

6. The keypad design of claim 5, wherein each of the neighboring keys has an arc-shaped cutout to accommodate the joystick.

7. The keypad design of claim 5, wherein the neighboring keys are positioned in a central section of the keypad.

8. The keypad design of claim 5, wherein the keypad includes keys entitled from 0 to 9 and 10 function keys, arranged by 4 rows and 5 columns.

9. The keypad design of claim 8, wherein the neighboring keys are located in column 3 of the 5 columns.

10. The keypad design of claim 9, wherein one of the neighboring keys is located in row 1 of the 4 rows and another neighboring key is located in row 2 of the 4 rows.
